# EUROPÄISCHE PATENTSCHRIFT

(11) **EP 0 396 132 B1**
(45) Veröffentlichungstag und Bekanntmachung des Hinweises auf die Patenterteilung: **31.03.1993**
(21) Anmeldenummer: 90108361.8
(22) Anmeldetag: 03.05.1990
(51) Int. Cl.: F28F 9/02, B21D 53/08, B23K 1/00, B23K 26/00

(54) **Wärmetauscher aus mindestens zwei Sammelrohren**
Heat exchanger having at least two header boxes
Echangeur ayant au moins deux collecteurs

(30) Priorität: 05.05.1989 DE 3914773
(43) Veröffentlichungstag der Anmeldung: 07.11.1990
(73) Patentinhaber: MTU MOTOREN- UND TURBINEN-UNION MÜNCHEN GMBH, D-80976 München (DE)
(72) Erfinder: Hoffmüller, Wilhelm, D-8000 München 50 (DE)

(56) Entgegenhaltungen:
- EP-A- 0 022 234
- EP-A- 0 313 038
- EP-A- 0 313 038
- DE-A- 3 722 329
- DE-C- 48 544
- GB-A- 1 295 224
- US-A- 1 743 877
- US-A- 1 854 340
- US-A- 2 983 167
- US-A- 3 133 659
- US-A- 3 431 949
- US-A- 3 688 372
- US-A- 3 710 858
- US-A- 3 785 040
- US-A- 4 227 393

## Beschreibung

Die Erfindung betrifft einen Wärmetauscher mit mindestens zwei Sammelrohren, die eine Vielzahl regelmäßig beabstandeter Profilröhrchen, die die Sammelrohre miteinander verbinden, aufweist und wobei die Sammelrohre aus mehreren miteinander verbundenen Blechlagen bestehen.

Ein derartiger Wärmetauscher ist beispielsweise aus der DE-C-36 36 762 bekannt geworden. Um einen guten Austauschgrad zu erzielen, wird bei solchen Wärmetauschern eine sehr große Anzahl von Profilröhrchen vorzusehen, die im Bereich von einigen tausend Stück liegen kann. Der Nachteil eines derartigen Wärmetauschers liegt darin, daß das Herausarbeiten der tausenden von Aussparungen aus den massiven Wanden der Rohre beipsielsweise mittels elektromechanischer Verfahren sehr aufwendig ist.

In der DE-A 37 22 329 ist ein pulvermetallurgisches Verfahren zur Bildung von Wärmetauschersammelrohren beschrieben, das eine automatische Verbindung der Profilrohre mit den Sammelrohren erlaubt. Bei diesem Verfahren sind Sammelrohrhalbschalen als schichtartig aufgebaute Verbundbauteile ausgebildet, die dadurch erzeugt werden, daß Metallpulver zwischen zwei Formschalen geschüttet wird, und anschließend gesintert wird. Die so ausgebildeten Sammelrohre weisen jedoch den Nachteil auf, daß die Dichtheit der Rohrwandung aufgrund der zwangsläufig auftretenden Poren nicht gewährleistet ist, und daher ein erhöhter Prüf- und Dichtaufwand im Anschluß an die Sammelrohrherstellung notwendig ist.

Aus der US-A-1 743 877 ist ein Hochdruckkessel bekannt, dessen Kesselwandung aus einem zwei oder mehrlagig miteinander verbundenen dickwandigen zylindrischen Mantelrohr aufgebaut ist. An einer Stelle des Umfangs ist eine Reihe Bohrungen für den druckdichten Anschluß von Leitungsrohren vorgesehen.

Aus der US-A-3 133 659 ist es bekannt, einen Druckkessel dadurch zu erzeugen, daß bandförmiges Material schraubenlinienartig über einen Kern gewickelt wird, wobei zwischen dem bandförmigen Material Lötwerkstoff aufgewickelt wird. Einen Hinweis auf die Ausbildung eines Wärmetauschers der gattungsgemäßen Bauart, bei dem eine Vielzahl von regelmäßig beabstandeten Profilröhrchen an Sammelrohre anzuschließen ist, kann aus den US-Patentschriften nicht entnommen werden.

Aufgabe der vorliegenden Erfindung ist es, einen gattungsgemäßen Wärmetauscher anzugeben, der schneller und kostengünstiger herstellbar ist als vorbekannte Ausführungen. Ferner ist es Aufgabe, ein Herstellverfahren dafür anzugeben.

Erfindungsgemäß wird die Aufgabe durch die Merkmale der Patentansprüche 1, bzw. 7 und 8 gelöst. Der wesentliche Vorteil der Erfindung ist darin zu sehen, daß die einzelnen, relativ dünnen Blechlagen auf einfache Weise, beispielsweise auf mechanische Art mit Aussparungen versehen werden können, und anschließend die einzelnen Blechlagen bezüglich ihrer Aussparungen zueinander ausgerichtet und miteinander verbunden werden. Die Einzelbearbeitung dünner Blechlagen gestaltet sich dabei wesentlich einfacher als eine Bearbeitung massiver Sammelrohre, deren Wandstärke je nach Baugröße und Druckdifferenz zwischen 5 und 15mm beträgt. Beim Stanzen der Aussparungen der dünnen Blechlagen ist vorteilhafterweise eine Blechverformung bei nahe zusammenliegenden Aussparungen vermeidbar. Weiterhin von Vorteil ist, daß bei der vorgeschlagenen Verbindungstechnik die Wärmetauscherröhrchen praktisch verzugsfrei mit dem Sammelrohr verbunden werden können.

Vorzugsweise wird jedes Sammelrohr aus zwei axial zusammengefügten aus, Blechlagen bestehenden Halbschalen gebildet, wodurch ein Aufbau der einzelnen Halbschalen durch Übereinanderschichten der Blechlagen sehr einfach durchführbar ist, und kleinere Toleranzen bezüglich der Ausrichtung der Aussparungen leicht ausgeglichen werden können.

Eine alternative Ausführung der Erfindung sieht vor, daß jedes Sammelrohr mehrlagig aus einem streifenförmigen Blech gewickelt ist. Streifenförmig bedeutet dabei, daß die Breite des Streifens der Länge des Sammelrohres entspricht, während die Streifenlänge etwa dem Sammelrohrumfang multipliziert mit der Anzahl der zu wickelnden Lagen entspricht. Vorteilhafterweise wird das streifenförmige Blech vor dem Wickelvorgang entweder mit einer Lötschicht versehen, oder eine Lötfolie mit den gleichen Außenmaßen wird zwischen die Blechlagen untergewickelt. Die Verbindung der Blechlagen geschieht vorzugsweise bei den beiden oben beschriebenen Verfahren durch Zusammmmenlöten, wobei das Lot entweder als Lotfolie mit einer Dicke von etwa 3 bis 10/100 mm zwischen die einzelnen Blechlagen gebracht wird, oder Lot direkt auf eine oder beide Seiten der Bleche aufgebracht wird. Nach dem Aufeinanderlegen und Ausrichten der Blechlagen werden diese in einem Ofen zusammengefügt.

Vorzugsweise besteht die Stärke der Blechlagen zwischen 0,2 und 1mm, wobei ein Wert 0,5 mm sich als besonders geeignet herausgestellt hat, nach dem bei einer derartigen Blechstärke sowohl das Ausstanzen ohne unerwünschte Verformungen möglich ist, während gleichzeitig nicht eine übermäßige Anzahl von Blechlagen zu verbinden ist. Als Material für die Blechlagen eignet sich Jede überlicherweise verwendete Stahl- oder Nickellegierung, beispielsweise Hastelloy X, C 263, X 10 CrNiTi 189, X 15 Cr Ni Si 2520.

Jedoch sind auch andere verformbare Legierungen hierfür geeignet. Eine Weiterbildung der Erfindung sieht vor, 10 bis 30 Blechlagen zur Bildung der Sammelrohre übereinander angeordnet und miteinander verbunden sind. Am geeignetsten hat es sich herausgestellt, wenn die Blechlagen eine Stärke von 1/10 bis 1/20 der zu fertigenden Sammeltauscherwandung aufweisen.

Ein bevorzugtes Verfahren zur Herstellung eines Wärmetauschers gemäß dem Anspruch 1 ist im Anspruch 7 beschrieben. Der wesentliche Vorteil dieses Fertigungsverfahrens ergibt sich dadurch, daß das Zusammenfügen der einzelnen Blechlagen durch eine innerhalb des fertigenden Sammelrohres angeordneten Wärmequelle erfolgt. Dieve Anordnung hat den Vorteil, daß die Innenwand des zu bildenden Sammelrohres eine höhere Temperatur aufweist, als die Außenwand und somit die Thermodehnungen innen größer sind als außen. Dadurch wird vorteilhafterweise eine lückenlose Verbindung der übereinander geschichteten Blechlagen erreicht, ohne daß unerwünschte Hohlräume zwischen den Blechlagen verbleiben. Ein weiterer Vorteil besteht darin, daß die relativ dünnwandigen Profilröhrchen außerhalb des Sammelrohres nicht durch die hohe Lötetemperatur direkt belastet werden.

Ein vorteilhaftes Verfahren zur Herstellung eines Wärmetauschersammelrohres gemäß dem Anspruch 3 ist im Verfahrensanspruch 8 beschrieben.

Der wesentliche Vorteil dieser Anordnung besteht darin, daß mittels dieses Verfahrens sehr dünne Blechlagen in Form von Folien bis zu 0,2 mm Stärke verwendet werden können. Bei derartig dünnen Folien ist der Aufwand zur Ausstanzung der Profilröhrchen sehr gering. Eine wesentliche Verfahrensvereinfachung ist dadurch erzielbar, daß gleichzeitig mit dem Wickeln desBlechbandes eine Lötfolie mit eingewickelt werden kann und durch geeignete Vorrichtungen im Inneren des Sammelrohres bei jeder Umdrehung in der äußersten Blechlage die Aussparungen eingestanzt werden können.

Eine vorteilhafte Weiterbildung der beschriebenen Herstellverfahren besteht darin, die Aussparungen der übereinanderliegenden Blechlagen von außen nach innen geometrisch ähnlich mit zunehmender Größe gefertigt werden, derart, daß die Aussparungen der fertigen Sammelrohre leicht konisch ausgebildet sind. Nach dem Einstecken der Profilröhrchen in die Aussparungen werden die verbleibenden ringförmigen Spalte zwischen den Profilröhrchen und der Sammelrohrwandung mittels eines Auftragsschweißverfahrens verbunden. Diese Anordnung hat den Vorteil, daß einerseits an die Toleranz der zu fertigenden Aussparungen keine so hohen Anforderungen gestellt werden müssen und dadurch das Stanzund Fertigungsverfahren vereinfacht werden kann. Gleichzeitig wird trotzdem eine feste und gasdichte Fügung zwischen dem Profilröhrchen und dem Sammelrohr möglich.

In bevorzugter Weiterbildung der Erfindung ist das Auftragsverfahren ein Laserauftragsverfahren, bei dem ein justierbarer Laserstrahl von innen auf die zu bearbeitende Stelle des Sammelrohres gerichtet und fokusiert wird, und auf diese Fokusierstelle Metallpulver unter Schutzgas aufgespritzt wird. Unter justierbar ist dabei zu verstehen, daß entweder das Sammelrohr fixiert ist und der Laser beispielsweise über verstellbare Spiegel und Prismen ausgerichtet wird, oder der Laserstrahl ausgerichtet ist und das Sammelrohr mit einem Roboter verbunden ist, der die erforderlichen Bewegungsachsen, beispielsweise sechs Bewegungsachsen aufweist. Als Schutzgas eignet sich Argon, CO₂, Helium oder andere bekannte Inertgase. Der Vorteil dieses Verfahrens besteht darin, das Auftragsverfahren unter atmosphärischen Bedingungen durchgeführt werden kann, nachdem nur die zu bearbeitende Stelle auf eine hohe Temperatur gebracht wird, während der Rest des Bauteiles kühl und somit nicht oxidationsanfällig verbleibt. Die dabei erzielte Anschmelztiefe beträgt ca.0,05-0,2 mm, wodurch Verzug im Bauteil vermieden werden kann. Die erhitzte Stelle wird durch die Schutzgaszufuhr von Sauerstoff freigehalten, daß auch dort keine Oxidationsgefahr zu befürchten ist. Als Metallpulver eignet sich Legierungspulver aus Hastelloy X oder C 263, mit einer Partikelgröße von ungefähr 60-120 µm.

Die Erfindung wird nachfolgend anhand der beigefügten Figur weiter erläutert. Dabei zeigt:
- Fig. 1: einen Teilquerschnitt durch ein Sammelrohr,
- Fig. 2: einen Detailschnitt eines Sammelrohres,
- Fig. 3: einem Teilquerschnitt durch ein weiteres Sammelrohr
- Fig. 4: eine schematische Schnittdarstellung einer Vorrichtung zur Fertigung des Sammelrohres gemäß Fig. 1a.
- Fig. 5: die Vorrichtung gemäß Fig. 4 in einem Längsschnitt,
- Fig. 6: schematisch die Anordnung von Aussparungen.

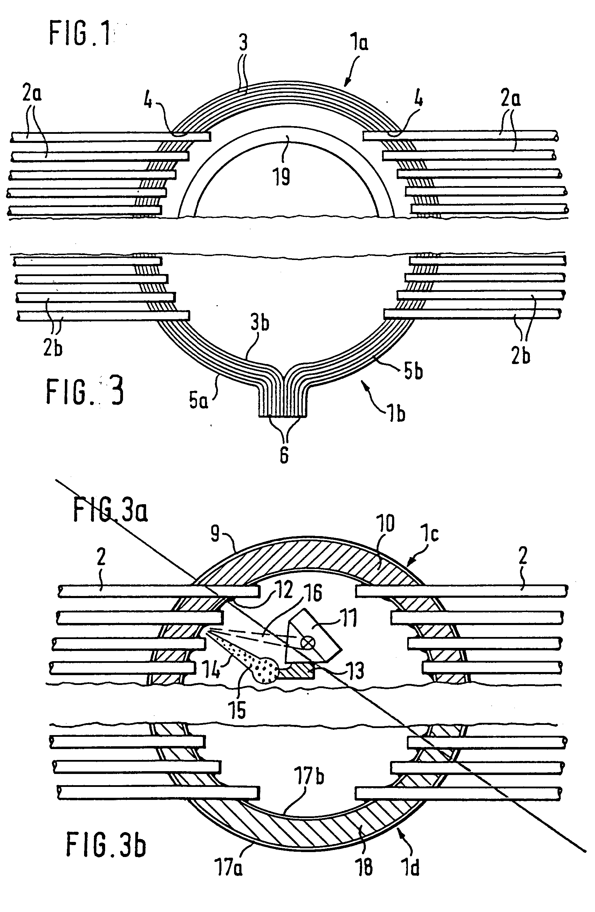

In Fig. 1 ist ein Sammelrohr 1a eines Wärmetauschers dargestellt, an dem an zwei sich gegenüberliegenden Wandabschnitten Profilröhrchen 2a angebracht sind. Diese Profilröhrchen 2a sind vorzugsweise U-förmig gekrümmt und mit ihrem anderen Ende an einem nicht dargestellten zweiten Sammelrohr angebracht. Das Sammelrohr 1a besteht dabei aus einer Anzahl konzentrischer, zylindrischer Blechlagen 3, die über Lotzwischenlagen miteinander verbunden sind.

Die Profilröhrchen 2a sind dabei durch formangepaßte Aussparungen 4 durch das Sammelrohr 1a gesteckt und mit diesem verlötet. In zig. 1a ist ferner eine zylindrische Heizvorrichtung 19 dargestellt, die das zu fertigende Sammelröhr 1a von innen beheizt, und somit die Blechlagen 3 zusammenfügt. Eine derartige Heizvorrichtung 19 ist genauso bei den Sammelrohrausführungen 1,b,c,d zur Verbindung der Blechlagen 3 durch die dazwischen angeordneten Lötschichten 7 anwendbar.

Die Ausführung gemäß Fig. 3 unterscheidet sich von der obigen Ausführung dadurch, daß das Sammelrohr 1b aus zwei zusammengefügten Halbschalen 5a, 5b besteht, wobei diese Halbschalen 5a, 5b Befestigungsflanche 6 aufweisen, an denen sie, beispielsweise mittels Schrauben, miteinander verbunden sind. Ein weiterer Unterschied zur Ausführung gemäß Fig. 1 besteht darain, daß die Profilröhrchen 2b weiter in das Innere des Sammelrohres 1b hineinragen und mit der innersten Blechlage 3b mittels eines Auftragsschweißverfahrens verschweißt sind. Dieses Schweißverfahren kann dabei zusätzlich zur Lötverbindung zwischen Profilröhrchen 2b und der Wand des Sammelrohres 1b erfolgen.

In Fig. 2 ist ein Schnitt durch das Sammelrohr 1 gezeigt, bei dem zu sehen ist, wie dieses aus mehreren übereinanderliegenden Blechlagen 3 aufgebaut ist, wobei zwischen den Blechlagen 3 Lotschichten 7 vorgesehen sind. Die Aussparung 4 für das Profilröhrchen 2 ist konisch nach innen sich erweiternd ausgeführt derart, daß es an der Außenwand des Sammelrohres 1 der Größe und Kontur des Sammelrohres 2 entspricht. Der ringförmige Spalt zwischen der Wandung des Profilröhrchens 2 und der Aussparung 4 ist mittels im Auftragsschweißverfahren aufgebrachten Schweißgutes 8 ausgefüllt, so daß eine feste Verbindung zwischen dem Sammelrohr 1 und dem Profilröhrchen 2 erzielbar ist.

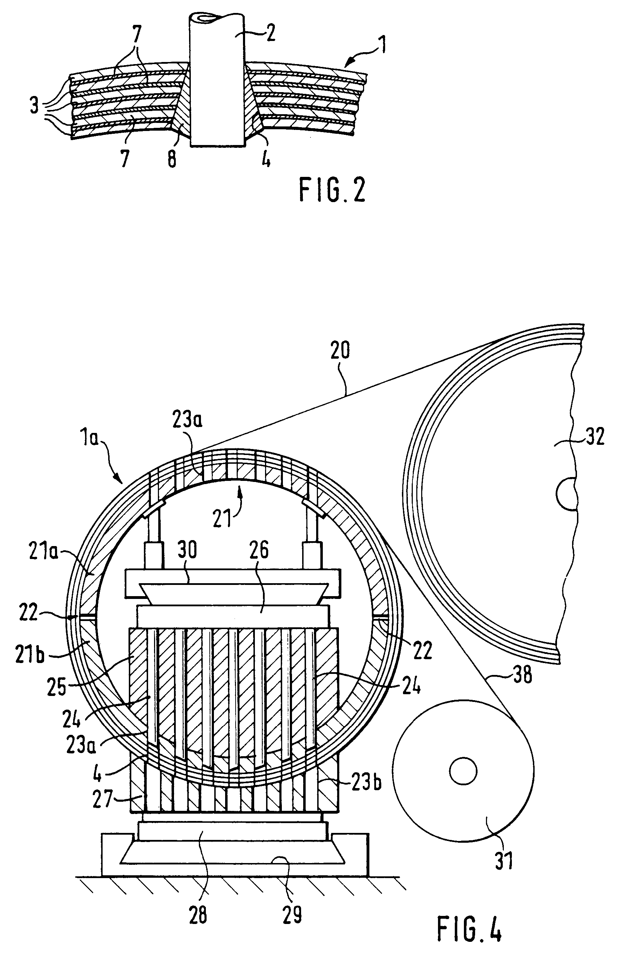

In Fig. 4 ist ein Querschnitt durch eine Vorrichtung zur Herstellung eines Sammelrohres 1a dargestellt, daß aus einem Blechband 20 gewickelt ist. Hierzu ist ein aus zwei Teilelementen 21a, b bestehender Wickelzapfen 21 vorgesehen, der in Umfangsrichtung drehbar gelagert ist.

Zwischen den beiden Teilelementen 21a, 21b ist ein Spalt 22 vorgesehen der zur Entfernung des fertigen Sammelrohres 1a dient. Dazu ist eine der Telelemente 21a,b radial verschiebbar angeordnet, derart, daß zum Abnehmen des fertig gewickelten Sammelrohres der Spalt 22 geschlossen wird. Das eine Teilelement 21b ist mit einer Anzahl Ausnehmungen 23a versehen, die der Anzahl und der Lage der im Sammelrohr 1a zu fertigenden Aussparungen 4 entspricht. Fluchtend mit den Ausnehmungen 23a ist eine Reihe von Stanzstempeln 24 vorgesehen, die in einer Führung 25 axial verschiebbar angeordnet sind und durch eine gemeinsame Betätigungsvorrichtung 26 in ihrer axialen Richtung bewegbar sind.

Den Stanzstempeln 24 gegenüberliegend ist ein mit Aussparungen 23b versehenes Gegenstück 27 angeordnet wobei deren sammelrohrseitigen Kante als Schneiden ausgebildet sind, und die Aussparungen 23b mit den Aussparungen 23a fluchten. Mittels einer Hubvorrichtung 28 ist das Gegenstück 27 in Richtung des Sammelrohres 1 bewegbar. Gegenstück 27 und Hubvorrichtung 28 sind gmeinsam über eine Führungsschiene 29 senkrecht zur Blattebene bewegbar.

Die Betätigungsvorrichtung 26 ist über eine zweite Führungsschiene 30 in der gleichen Richtung bewegbar, wobei durch nicht dargestellte Mittel beide elemente derart gemeinsam bewegbar sind, daß die Ausnehmungen 23a, b bzw. die Stanzstempel 24 und die Ausnehmungen 23b stets miteinander fluchten.

Ebenfalls dargestellt ist eine Lotfolienvorratsrolle 31 und eine Blechbandvorratsrolle 32 die über geeignete Vorrichtungen drehbar gelagert und mit dem nötigen Zug vorgespannt sind.

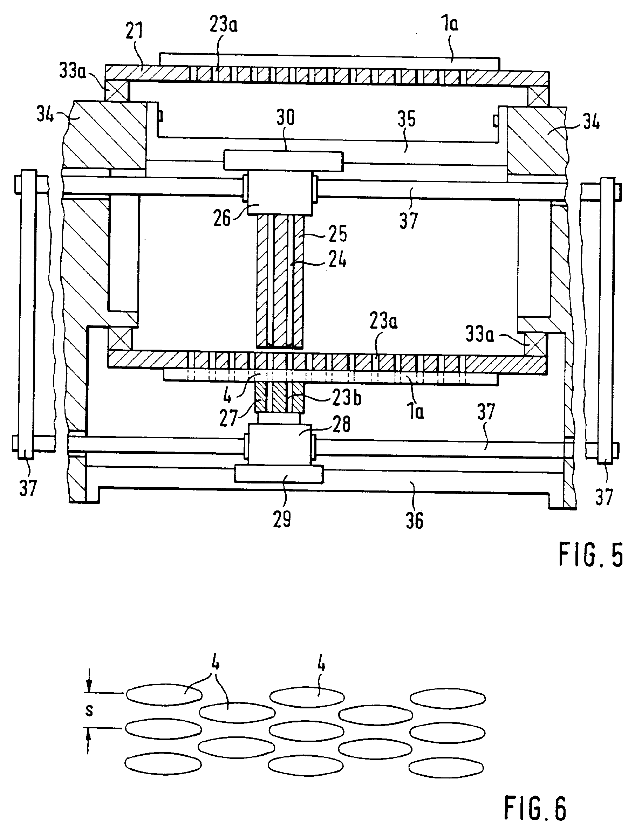

In Fig. 5 ist ein Längsschnitt durch die Wickelvorrichtung gemäß Fig. 4 gezeigt. Das zu wickelnde und mit Ausnehmungen zu versehende Sammelrohr 1a ist auf dem hülsenartigen Wickelzapfen 11 angebracht, der wiederum über Lager 33a an einem Gehäuse 34 drehbar angebracht ist. Die beiden Teilelemente 21a,b des Wickelzapfens 21 sind entlang der Erstreckung des zu fertigenden Sammelrohres 1a mit den Ausnehmungen 23a für die Stanzstempel 24 versehen. Zwei Reihen von Stanzstempeln 24 sind gemeinsam in der Führung 25 geführt und werden zum Stanzen der Aussparungen 4 im Sammelrohr 1a mittels der Betätigungsvorrichtung 26 durch die Ausnehmungen 23 des Wickelzapfens 21 bis in die Ausnehmungen 23b des Gegenstückes 27 vorgeschoben. Dabei werden durch die Schneiden der Stanzstempel 24 in der radial äußersten Blechlage des Sammelrohres, 1a Aussparungen 4 eingestanzt, die mit den Aussparungen der darunterliegenden Blechlagen fluchten. Anschließend werden die zwei Reihen Stanzstempel 24 zurückgefahren und die Führung 25 und das Gegenstück 27 gemeinsam um eine Reihe Aussparungen in Axialrichtung des Sammelrohres 1a verschoben, wo sich der Stanzvorgang wiederholt. Zu diesem Zweck ist die Betätigungsvorrichtung 16 der Stempelführung 25 und die Hubvorrichtung 28 des Gegenstückes 27 über Führungsschienen 19, 30 auf dem Gehäuse 34 abgestützten Trägern 35 und 36 gleitverschieblich angeordnet. Zur Erzielung einer synchronen Bewegung von Führung 25 und Gegenstück 27 sind diese über Verbindungsglieder 37 miteinander gekoppelt.

Zur Herstellung eines Sammelrohres 1a (siehe Fig. 4) wird ein Ende des Blechbandes 20 von der Blechbandvorratsrolle 32 abgewickelt und an dem Wickelzapfen 21 befestigt, was beispielsweise dadurch geschehen kann, daß das Ende in einem der Spalte 22 befestigt wird. So dann wird über eine nicht dargestellte Antriebsvorrichtung der Wickelzapfen 21 um eine halbe Umdrehung gedreht, wobei in zwei um 180° gegenüberliegenden Positionen gehalten wird. In dieser Position wird das Gegenstück 27 gegen die erste Blechlage des Sammelrohres 1a gedrückt und die Stanzstempel 24 zur Ausstanzungen der ersten Reihe Aussparungen 4 vorgefahren. Anschließend werden die Stanzstempel 24 zurückgefahren und die Betätigungsvorrichtung 26 entlang der Führungsschiene 30 gemeinsam mit dem Gegenstück 27 um eine Reihe Ausnehmungen 23a weitergefahren. Der Stanzvorgang wiederholt sich anschließend so oft, bis auf einer Seite des Sammelrohres 1a sämtliche Aussparungen 4 ausgestanzt wurden. Anschließend wird der Wickelzapfen 21 um eine halbe Umdrehung weitergedreht und der Vorgang wiederholt sich auf dieser Seite des Sammelrohres auf gleiche Weise.

Nach dem die erste Lage des Blechstreifens 20 auf den Wickelzapfen 21 aufgewickelt ist, wird an diesem eine Lötfolie 38 der gleichen Breite befestigt. Anschließend wird in Intervallen von jeweils einer halben Umdrehung der Wickelzapfen solange weitergedreht, bis die erforderliche Zahl von Blechlagen auf dem Wickelzapfen 21 aufgewickelt sind. Dabei wird bei jeder Umdrehung zweimal unterbrochen, um den oben beschriebenen Stanzvorgang durchzuführen. Nachdem mit jeder Blechlage der Außenradius des zu wickelnden Sammelrohres 1a anwächst, es andererseits aber erforderlich ist, die Ausnehmungen 23b im Gegenstück 27 zur Bildung exakter Stanzkanten an die Blechkontur bzw. die schneidenden Stanzstempel 24 exakt angepaßt sein muß, ist eine Anpassung des Gegenstückes 27 ebenfalls erforderlich. Dies kann dadurch geschehen, daß bei jeder Wickellage der Stanzstempel 27 ausgewechselt wird.

Denkbar ist es, hierzu eine Reihe von Gegenstücken 27 hintereinander vorzuzsehen, die einzeln mit Hubvorrichtungen 28 versehen werden können und je nach Anteil der gewickelten Blechlagen hochgefahren werden. Es ist zweckmäßig die gesamte Vorrichtung, d.h. die Bewegung des Wickelzapfens 21, die Betätigungsvorrichtung 26, der Hubvorrichtung 28 und der Bewegung mittels der Führungsschiene 29,30 durch einen Zentralrechner zu koordinieren.

In Fig. 6 ist dargestellt wie die Aussparungen 4 angeordnet sind. In einem Arbeitsvorgang werden die schraffiert dargestellten Aussparungen 4 mittels der zwei Reihen von Stanzstempeln 24 gemäß Fig. 5 ausgestanzt. Anschließend wird die Führung 25 um die Strecke s weitergeschoben, und die nächsten zwei Reihen zickzackartig versetzter Aussparungen 4 werden ausgestanzt.

## Patentansprüche

1. Wärmetauscher mit mindestens zwei Sammelrohen (1, 1a, 1b), die eine Vielzahl von Aussparungen (4) für die Aufnahme von regelmäßig beabstandeten Profilröhrchen (2), die die Sammelrohre (1, 1a, 1b) miteinander verbinden, aufweist, dadurch gekennzeichnet, daß jedes Sammelrohr (1, 1a, 1b) aus einzelnen, relativ dünnen, mit Aussparungen versehenen miteinander verbundenen, Blechlagen (3) besteht, wobei die Aussparungen (4) in den Blechen vor dem Zusammenfügen der Blechlagen (3) gefertigt sind.

2. Wärmetauscher nach Anspruch 1, dadurch gekennzeichnet, daß jedes Sammelrohr (1b) aus zwei axial zusammengefügten, aus den Blechlagen (3) bestehenden Halbschalen (5a, b) gebildet wird.

3. Wärmetauscher nach Anspruch 1, dadurch gekennzeichnet, daß die Sammelrohre (1, 1a) durch Wickeln eines streifenförmigen Bleches entstanden sind.

4. Wärmetauscher nach einem der vorhergehenden Ansprüche, dadurch gekennzeichnet, daß die Verbindung der aufeinandergeschichteten Blechlagen (3) eine Lötverbindung ist.

5. Wärmetauscher nach Anspruch 1, dadurch gekennzeichnet, daß die Blechlagen (3) eine Wandstärke von 0,2 bis 1 mm aufweisen.

6. Wärmetauscher nach Anspruch 1, dadurch gekennzeichnet, daß zur Bildung eines Sammelrohres (1) 10 bis 30 Blechlagen (3) übereinander angeordnet sind.

7. Verfahren zur Herstellung eines Wärmetauschers nach Anspruch 1, gekennzeichnet durch folgende Verfahrensschritte:
a) ausgeschnittene Bleche werden in einer Ebene mit dem individuell erforderlichem Radius gebogen,
b) Aussparungen (4) für die Profilröhrchen (2) werden eingestanzt,
c) die Bleche (3) werden mindestens auf einer Seite mit einer Lotschicht (7) versehen,
d) die Bleche (3) werden übereinander gestapelt und bezüglich der Fluchtung der Aussparungen (4) ausgerichtet,
e) die Profilröhrchen (2) werden in die Aussparungen eingesteckt und fixiert,
f) von radial innen wird mittels einer Wärmequelle die Löttemperatur für die zur Verbindung der Bleche (3) erforderliche Zeit aufgebracht.

8. Verfahren zur Herstellung des Sammelrohres eines Wärmetauschers nach Anspruch 3, dadurch gekennzeichnet, daß ein Blechband der erforderlichen Breite unter Einwicklung einer Lötfolie (38) auf einen drehbaren Wickelzapfen (21) des erforderlichen Sammelrohrinnendurchmessers aufgewickelt wird, und im Inneren des Wikkelzapfens (21) vorgesehene Stanzstempel (24) zur Fertigung der Aussparungen (4) gegen ein außen angebrachtes Gegenstück (27) wirken.

9. Verfahren nach Anspruch 8, dadurch gekennzeichnet, daß die Stanzstempel (24) gemeinsam mit dem Gegenstück (27) zum Ausstanzen einer Reihe in Umfangsrichtung nebeneinanderliegender Aussparungen 84) jeweils um den axialen Abstand (s) der Aussparungen (4) verschoben werden.

10. Verfahren nach Anspruch 7 oder 8, dadurch gekennzeichnet, daß die Aussparungen der übereinanderliegenden Blechlagen (3) von außen nach innen geometrisch ähnlich mit zunehmender Größe gefertigt werden, derart, daß die Aussparungen (4) in den Sammelrohren konisch ausgebildet sind, und nach Einstecken und Fixieren der Profilröhrchen (2) mittels eines Auftragsschweißverfahrens die Profilröhrchen (2) mit dem Sammelrohr (1) verbunden werden.

11. Verfahren nach Anspruch 10, dadurch gekennzeichnet, daß bei dem Auftragsverfahren ein Laserstrahl von innen auf die zu beschichtende Stelle des Sammelrohres (1) gerichtet wird, und auf diese Stelle pulverförmiges Schweißgut unter Schutzgaszufuhr aufgespritzt und aufgeschmolzen wird.

## Claims

1. Heat exchanger having at least two collector tubes (1, 1a, 1b) which comprise a plurality of recesses (4) for accommodating regularly spaced small profiled pipes (2) which connect the collector tubes (1, 1a, 1b) to one another, characterised in that each collector tube (1, 1a, 1b) consists of individual, relatively thin sheet metal layers (3) which are provided with recesses and are connected to one another, wherein the recesses (4) in the metal sheets are produced before the sheet metal layers (3) are joined together.

2. Heat exchanger according to Claim 1,
characterised in that each collector tube (1b) is formed of two half-shells (5a, b) which are axially joined together and consist of the sheet metal layers (3).

3. Heat exchanger according to Claim 1,
characterised in that the collector tubes (1, 1a) are produced as a result of the winding of a strip-like metal sheet.

4. Heat exchanger according to any one of the preceding claims, characterised in that the connection between the superimposed sheet metal layers (3) is a solder connection.

5. Heat exchanger according to Claim 1,
characterised in that the sheet metal layers (3) have a wall thickness of between 0.2 and 1 mm.

6. Heat exchanger according to Claim 1,
characterised in that 10 to 30 sheet metal layers (3) are superimposed in order to form a collector tube (1).

7. Method for producing a heat exchanger according to Claim 1, characterised by the following method steps:
a) cut-out metal sheets are curved in a plane with the individually required radius;
b) recesses (4) for the small profiled pipes (2) are stamped in;
c) the metal sheets (3) are provided with a layer of solder (7) at least on one side;
d) the metal sheets (3) are stacked one above the other and aligned relative to the alignment of the recesses (4);
e) the small profiled pipes (2) are inserted and secured in the recesses; and
f) the soldering temperature is applied radially from the interior by means of a heat source for the length of time required for connecting the metal sheets (3).

8. Method for producing the collector tube of a heat exchanger according to Claim 3,
characterised in that a sheet metal strip of the required width is wound onto a rotatable winding journal (21) of the internal diameter necessary for the collector tube with the incorporation of a solder foil (38), and punches (24) provided inside the winding journal (21) act against an externally mounted counterpart (27) to prepare the recesses (4) .

9. Method according to Claim 8,
characterised in that the punches (24) together with the counter-part (27) are displaced in each case by the axial distance (s) between the recesses (4) to stamp out a row of recesses (84) adjacent one another in the peripheral direction.

10. Method according to Claim 7 or 8,
characterised in that the recesses in the superimposed sheet metal layers (3) are produced such that they are geometrically similar and increase in size from the exterior to the interior in such a way that the recesses (4) in the collector tubes are conical, and the small profiled pipes (2) are connected to the collector tube (1) when the small profiled pipes (2) have been inserted and secured by means of a build-up welding process.

11. Method according to Claim 10,
characterised in that, during the build-up welding process, a laser beam is directed from the interior onto the point of the collector tube (1) to be coated, and at this point welding material in powder form is sprayed on and melted on under a protective gas envelope.

## Revendications

1. Echangeur thermique comportant au moins deux tubes collecteurs (1 1a, 1b) percés d'une pluralité d'évidements (4) qui reçoivent des petits profils tubulaires (2), régulièrement espacés, reliant les tubes collecteurs (1, 1a, 1b), caractérisé en ce que chaque tube collecteur (1, 1a, 1b) est constitué de couches distinctes de tôle (3), relativement minces percées de découpes et solidarisées entre elles, les évidements (4) dans les tôles étant faites avant la réunion des couches de tôle.

2. Echangeur thermique selon la revendication 1, caractérisé en ce que chaque tube collecteur (1b) est fait de deux demi-coquilles (5a, b) constituées par les couches de tôle (3) et assemblées le long d'un plan axial.

3. Echangeur thermique selon la revendication 1, caractérisé en ce que les tubes collecteurs (1, 1a) sont obtenus par enroulement d'une bande de feuillard.

4. Echangeur thermique selon une des revendications précédentes, caractérisé en ce que la liaison entre les couches superposées de tôle est une liaison par soudure.

5. Echangeur thermique selon la revendication 1, caractérisé en ce que les couches de tôle (3) ont un épaisseur de 0,2 à 1 m.

6. Echangeur thermique selon la revendication 1, caractérisé en ce que dix à trente couches de tôle (3) sont superposées pour former un tube collecteur (1).

7. Procédé de fabrication d'un échangeur thermique selon la revendication 1, caractérisé par les étapes suivantes:
a) les tôles découpées sont roulées pour leur donner le rayon qui leur est propre,
b) les découpes (4) pour le passage des profilés tubulaires (2) sont réalisées par poinçonnage,
c) les tôles (3) sont recouvertes, sur au moins une face, d'une couche de soudure (7),
d) les tôles sont empilées les unes sur les autres, avec alignement des découpes (4),
e) les profilés tubulaires (2) sont emmanchés dans les découpes et fixés,
f) la température de soudage, pendant le temps nécessaire pour solidariser les tôles, est fournie par le rayonnement radial d'une source de chaleur située à l'intérieur du tube.

8. Procédé de fabrication du tube collecteur d'un échangeur thermique selon la revendication 3, caractérisé en ce qu'une bande de feuillard de la largeur nécessaire est enroulée avec une pellicule de soudure (98) sur un mandrin enrouleur tournant de diamètre extérieur égal au diamètre intérieur du tube collecteur, tandis que des poinçons d'évidement (24), disposées à l'intérieur du mandrin enrouleur (21), coopèrent avec une pièce antagoniste extérieure (27) pour réaliser les découpes (4).

9. Procédé selon la revendication 8, caractérisé en ce que les poinçons de découpe (24) et la partie constitutive (27) pour produire une série d'évidement répartis périphériquement les unes à côté des autres, effectuent ensemble un déplacement égal à l'espacement axial(s) des découpes.

10. Procédé selon la revendication 7 ou 8, caractérisé en ce que les évidements des couches de tôle (3) superposées ont la même forme géométrique mais une grandeur qui va croissant de l'extérieur vers l'intérieur de sorte que les évidements (4) forment des cônes dans la paroi du tube collecteur qui, après enfoncement et fixation des profilés tubulaires sont garnis, par l'emploi d'un procédé de soudage avec métal d'apport, d'un apport assurant la liaison entre les profilés (2) et le tube collecteur (1).

11. Procédé selon la revendication 10, caractérisé en ce que le procédé de soudage avec métal d'apport met en oeuvre un rayon laser dirigé sur les zones à recouvrir du tube collecteur (1), ces mêmes zones recevant une projection sous protection gazeuse, d'un produit de soudure pulvérulent qui se troue fendu sur place.
